# EUROPEAN PATENT APPLICATION

(11) **EP 4 826 508 A1**
(43) Date of publication of application: **21.10.2026**
(21) Application number: 25210329.6
(22) Date of filing: 22.10.2025
(51) Int. Cl.: G06F 3/06

(54) **METADATA MAPPING METHOD, ELECTRONIC DEVICE, AND STORAGE MEDIUM**

(30) Priority: 14.04.2025 CN 202510467462
(71) Applicant: Beijing Volcano Engine Technology Co., Ltd., Beijing 100190 (CN); Lemon Inc., Grand Cayman, KY1-1205 (KY)
(72) Inventor: XIE, Jinwei, Beijing, 100028 (CN); XIAO, Shan, Beijing, 100028 (CN); LIN, Ming, Los Angeles, 90066 (US); GOGINENI, Bhanu, Los Angeles, 90066 (US)
(74) Representative: Isarpatent

(57) **Abstract**

A metadata mapping method, an electronic device, and a storage medium are provided. The method includes: when a plurality pieces of target data in a target logical data block are continuously written into a target disk partition, acquiring a start logical address, in the target logical data block, of the plurality pieces of target data and a start physical address, in the target disk partition, of the plurality pieces of target data (S201); determining a first bit length for relative logical address offsets of the plurality pieces of target data relative to the start logical address and a second bit length for relative physical address offsets of the plurality pieces of target data relative to the start physical address (S202); acquiring, for each of the plurality pieces of target data, a corresponding relative logical address offset with the first bit length and a corresponding relative physical address offset with the second bit length (S203); and constructing metadata of the plurality pieces of target data according to the start logical address, the start physical address, the first bit length, the second bit length, and the relative logical address offsets and the relative physical address offsets of the plurality pieces of target data, where the metadata is used for determining a mapping relationship between logical addresses and physical addresses of the plurality pieces of target data (S204).

## Description

### TECHNICAL FIELD

Embodiments of the present disclosure relate to the field of computer and network communication technologies, and in particular, to a metadata mapping method, an electronic device, and a storage medium.

### BACKGROUND

In a disk read and write process, conversion between a logical address and a physical address is usually required, and the mapping from the logical address to the physical address may be performed based on metadata.

For some disks that support only sequential writing, for example, a disk with a shingled magnetic recording (SMR) layout, metadata of the mapping from the logical address to the physical address of data in a logical data block (chunk) needs to record a global logical address offset, a logical address length, a global physical address offset, and a physical address length of the data, resulting in a large data volume of the metadata and occupying a relatively large amount of storage space.

### SUMMARY

Embodiments of the present disclosure provide a metadata mapping method, a device, a storage medium, and a program product to overcome the above problem.

An embodiment of the present disclosure provides a metadata mapping method, which includes:
when a plurality pieces of target data in a target logical data block are continuously written into a target disk partition (e.g. first disk partition), acquiring a start logical address, in the target logical data block (e.g. first logical data block), of the plurality pieces of target data and a start physical address, in the target disk partition, of the plurality pieces of target data;
determining a first bit length for relative logical address offsets of the plurality pieces of target data relative to the start logical address and a second bit length for relative physical address offsets of the plurality pieces of target data relative to the start physical address;
acquiring, for each of the plurality pieces of target data, a corresponding relative logical address offset with the first bit length and a corresponding relative physical address offset with the second bit length;
constructing metadata of the plurality pieces of target data is constructed according to the start logical address, the start physical address, the first bit length, the second bit length, and the relative logical address offsets and the relative physical address offsets of the plurality pieces of target data, where the metadata is used for determining a mapping relationship between logical addresses and physical addresses of the plurality pieces of target data

An embodiment of the present disclosure provides a metadata mapping device, which includes:
a start address determination unit, configured to: when a plurality pieces of target data in a target logical data block are continuously written into a target disk partition, acquire a start logical address, in the target logical data block, of the plurality pieces of target data and a start physical address, in the target disk partition, of the plurality pieces of target data.
a bit length determination unit, configured to determine a first bit length for relative logical address offsets of the plurality pieces of target data relative to the start logical address and a second bit length for relative physical address offsets of the plurality pieces of target data relative to the start physical address.
a relative offset determination unit, configured to acquire, for each of the plurality pieces of target data, a corresponding relative logical address offset with the first bit length and a corresponding relative physical address offset with the second bit length.
a construction unit, configured to construct metadata of the plurality pieces of target data according to the start logical address, the start physical address, the first bit length, the second bit length, and the relative logical address offsets and the relative physical address offsets of the plurality pieces of target data, where the metadata is used for determining a mapping relationship between logical addresses and physical addresses of the plurality pieces of target data.

An embodiment of the present disclosure provides an electronic device. The electronic device includes at least one processor and at least one memory.

The at least one memory stores a computer-executed instruction.

The at least one processor executes the computer-executed instruction stored in the at least one memory, causing the at least one processor executes the metadata mapping method according to at least one of the above embodiments.

An embodiment of the present disclosure provides a computer-readable storage medium. The computer-readable storage medium stores a computer-executed instruction. When a processor executes the computer-executed instruction, the metadata mapping method according to at least one of the above embodiments is implemented.

An embodiment of the present disclosure provides a computer program product, including a computer program. When the computer program is executed by a processor, the metadata mapping method according to at least one of the above embodiments is implemented.

### BRIEF DESCRIPTION OF DRAWINGS

In order to more clearly describe the technical solutions in the embodiments of the present disclosure, the drawings required in describing the embodiments will be briefly introduced below. Apparently, the drawings in the following description are some embodiments of the present disclosure, and for those of ordinary skill in the art, other drawings may also be acquired according to these drawings without paying any creative effort.
Fig. 1 is a schematic diagram of a metadata mapping;
Fig. 2 is a schematic flowchart of a metadata mapping method according to an embodiment of the present disclosure;
Fig. 3 is a schematic diagram of a preset data structure of storage device metadata according to an embodiment of the present disclosure;
Fig. 4 is a schematic flowchart of a metadata mapping method according to an embodiment of the present disclosure;
Fig. 5 is a structural block diagram of a metadata mapping device according to an embodiment of the present disclosure; and
Fig. 6 is a schematic diagram of a hardware structure of a metadata mapping device according to an embodiment of the present disclosure.

### DETAILED DESCRIPTION

In order to make objectives, technical solutions and advantages of embodiments of the present disclosure clearer, the technical solutions in the embodiments of the present disclosure will be clearly and completely described below with reference to the drawings in the embodiments of the present disclosure. Apparently, the described embodiments are some embodiments of the present disclosure, rather than all the embodiments. All other embodiments obtained by those of ordinary skill in the art based on the embodiments of the present disclosure without paying any creative effort shall fall within the protection scope of the present disclosure.

In a traditional perpendicular magnetic recording (PMR) technology, magnetic tracks are parallel and independent of each other, like a plurality of parallel tracks, and writing and reading of data do not affect each other. However, in a shingled magnetic recording (SMR) layout, magnetic tracks overlap with each other like tiles, and for a hard disk drive (HDD) of the same size, the SMR may allow more tracks to be stacked, thereby providing a higher storage density. However, because of such a magnetic track layout, the SMR disk supports only sequential writing.

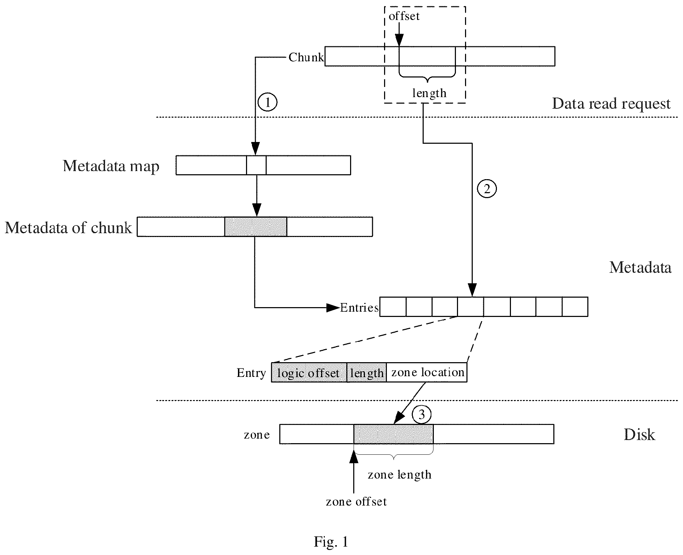

For the SMR disk mentioned above, metadata of the mapping from the logical address to the physical address of the data in a logical data block (chunk, the size of which may be specified) needs to record a global logical address offset, a logical address length, a global physical address offset, and a physical address length of the data, to implement mapping of chunk<offset, length> to a specific physical location <zone_id, zone_offset, zone_length>. A specific mapping process may be shown in Fig. 1. First, a data block identification chunkId of to-be-read data may be determined according to a data read request; then, metadata chunkMeta corresponding to the chunkId is found in a metadata map chunkMap according to the data block identification chunkId, where the metadata chunkMeta includes all index information of the data block chunk; an entry Entry corresponding to the to-be-read data is found in the index information of the chunk according to <offset, length> in the data read request, where one entry Entry includes the mapping from the logical address to the physical address of one piece of data; and then data may be read from a disk according to the physical address.

For different file systems, a real-time disk flushing approach may be used for metadata management. In this approach, after the metadata is modified, the modified metadata is immediately written into the disk, which may ensure that the stored metadata is always up-to-date. The approach provides high data reliability, but generates additional disk IO overheads. In one IO, not only actual data of the IO needs to be written, but also the metadata needs to be written once, which may generate frequent head movement. Therefore, another approach is to store all the metadata in the memory. In this approach, all the metadata information involved above is stored in the memory, so that the access and operation of the file system on the metadata during the running process are mainly performed in the memory, and there is no need to frequently read or write the metadata from or into the disk. In this approach, the reliability of the data may be ensured through periodic disk flushing and an additional recovery policy, but there is another technical challenge: a current conventional server generally has a memory capacity of 256 GiB, and it is necessary to solve the problem of how to store all metadata for different disk sizes in the memory of such a server.

Specifically, the space size occupied by the metadata is related to many factors: a capacity size of the disk, a design mode of a metadata management module, and the like. For an SMR disk, logic offset represents a logical offset of the continuous data in the chunk data, logic length represents a size corresponding to the data, zone offset represents a physical offset of the data in a zone, and zone length represents a physical length occupied by the data in the zone. For a chunk with a size of 4 GiB, 4 bytes are required to represent logic offset in an extreme case, and logic length may be calculated and obtained through the next Entry. For a zone of a size of 256 MiB (data in the zone is aligned according to a data unit of 4 KiB, that is, 256 MiB / 4096 == 65536 data units), zone offset is represented by using the data unit as a unit, and 2 bytes are required for representation in an extreme scenario. Zone length may be obtained through conversion from logic length according to set byte alignment. When each Entry is represented by using a fixed number of bytes, 6 bytes are required, occupying 48 bits. In the metadata management mode of recording the global logical address offset (logic offset) and the global physical address offset (zone offset) of the data, the metadata volume is large, occupying a relatively large amount of storage space.

It is worth noting that the chunk supports only sequential writing, and the number of zones that are simultaneously opened in the SMR disk is limited. Data of one chunk first fills one zone, and then is written into a next zone. Therefore, data included in one zone is always continuous at a chunk logic level. Moreover, for local IO of the chunk, there is always some correlation, and when the data is represented by using fixed 6 bytes, relatively large memory space consumption is generated.

In order to solve the technical problem mentioned above, an embodiment of the present disclosure provides a metadata mapping method. In the method, instead of using the global logical address offset and the global physical address offset, the metadata determines a start logical address of target data in a target logical data block and a start physical address of the target data in a target disk partition, and determines an appropriate bit length to record a relative logical address offset relative to the start logical address and a relative physical address offset relative to the start physical address. Compared with directly recording the global logical address offset and the global physical address offset, a memory size occupied by the metadata may be reduced, and a memory space for storing the metadata may be saved.

It should be noted that the target data is optionally selected, and the embodiments of the present disclosure do not impose any specific limitations thereon.

The metadata mapping method of the present disclosure is described in detail below with reference to specific embodiments.

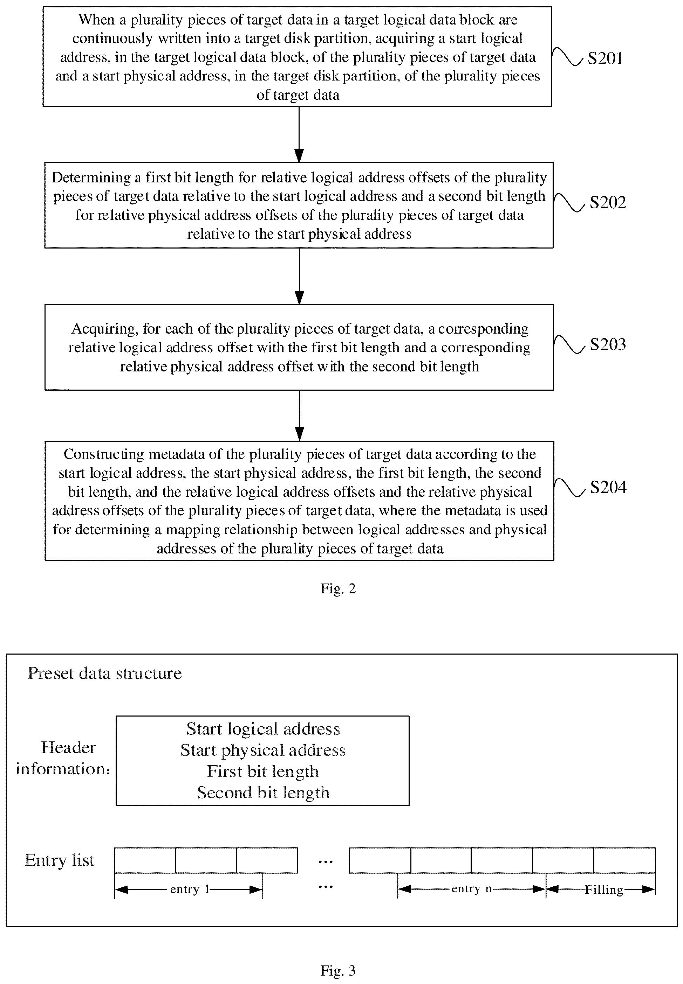

Referring to Fig. 2, Fig. 2 is a schematic flowchart of a metadata mapping method according to an embodiment of the present disclosure. The method in this embodiment may be applied to an electronic device, such as a terminal device or a server. The metadata mapping method includes S201 to S204.

In S201, when a plurality pieces of target data in a target logical data block are continuously written into a target disk partition, a start logical address, in the target logical data block, of the plurality pieces of target data and a start physical address, in the target disk partition, of the plurality pieces of target data are acquired.

In this embodiment, data in a specific target logical data block (chunk) may be stored in one or more target disk partitions (zones), and data in one or more logical data blocks may also be stored in a specific target disk partition. A disk with a shingled magnetic recording (SMR) layout supports only sequential writing and random reading, therefore, a plurality of consecutive pieces of target data in a specific target logical data block (chunk) are sequentially written into a specific target disk partition, and logical offsets of metadata of the plurality pieces of target data are consecutive.

On this basis, when the plurality pieces of target data in the target logical data block are continuously written into the target disk partition, the start logical address, in the target logical data block, of the plurality pieces of target data and the start physical address, in the target disk partition, of the plurality pieces of target data may be acquired. Further, based on the continuity of the metadata of the plurality pieces of target data, the relative logical address offset relative to the start logical address may be recorded based on the start logical address, and the relative physical address offset relative to the start physical address may be recorded based on the start physical address. Further, the global logical address offset may also be determined by combining the start logical address and the relative logical address offset, and the global physical address offset may also be determined by combining the start physical address and the relative physical address offset. In this embodiment, considering that the global logical address offset and the global physical address offset have a relatively long length, and the length is related to sizes of the target logical data block and the target disk partition, when a global logical address and a global physical address are recorded for each piece of target data, relatively large memory is occupied. However, the relative logical address offset and the relative physical address offset may have a shorter length than the global logical address offset and the global physical address offset, thereby saving the memory space occupied by the metadata.

In S202, a first bit length for relative logical address offsets of the plurality pieces of target data relative to the start logical address and a second bit length for relative physical address offsets of the plurality pieces of target data relative to the start physical address are determined.

In this embodiment, the relative logical address offset and the relative physical address offset may have a shorter length than the global logical address offset and the global physical address offset, and are related to a maximum relative offset of the plurality pieces of target data in the target logical data block and the target disk partition. For example, when a total length of the plurality pieces of target data in the target logical data block is 64 MiB, a relative offset starts from 0, and a maximum relative offset is 64 MiB - 1, each relative logical address offset may be represented by 26 bit lengths, which is shorter than using the global logical address offset. Certainly, the relative logical address offset may also be represented by more than 26 bit lengths (higher bits are 0). However, because the target disk partition uses 4 KiB as a minimum storage unit, the relative physical address offset also needs to be divided by 4 KiB to obtain a required number of minimum storage units, and then an actual bit length is obtained based on the required number of minimum storage units. By determining the first bit length of the relative logical address offset and the second bit length of the relative physical address offset, the relative logical address offset of each of the plurality pieces of target data may be recorded subsequently using the first bit length, and the relative physical address offset of each of the plurality pieces of target data may be recorded using the second bit length, thereby saving the memory space of the metadata.

Certainly, in the above example, when the relative offset of 64 MiB - 1 is represented by more than 26 bit lengths (higher bits are 0), although it is also representable, it may cause some waste of bits and waste of memory space. Therefore, in this embodiment, the minimum first bit length capable of representing the relative logical address offset and the minimum second bit length capable of representing the relative physical address offset may be selected. Of course, non-minimum bit lengths may also be used.

In S203, a corresponding relative logical address offset with the first bit length and a corresponding relative physical address offset with the second bit length are acquired for each of the plurality pieces of target data.

In this embodiment, after the start logical address, in the target logical data block, of the plurality pieces of target data, the start physical address, in the target disk partition, of the plurality pieces of target data, the first bit length for the relative logical address offsets, and the second bit length for the relative physical address offsets are determined, the relative logical address offset relative to the start logical address may be acquired respectively for each piece of target data, and is represented by the first bit length, to obtain the relative logical address offset with the first bit length; and the relative physical address offset relative to the start physical address is acquired respectively for each piece of target data, and is represented by the second bit length, to obtain the relative physical address offset with the second bit length.

In S204, metadata of the plurality pieces of target data is constructed according to the start logical address, the start physical address, the first bit length, the second bit length, and the relative logical address offsets and the relative physical address offsets of the plurality pieces of target data, where the metadata is used for determining a mapping relationship between logical addresses and physical addresses of the plurality pieces of target data.

In this embodiment, the global logical address offsets and the global physical address offsets of the plurality pieces of target data may be determined based on the start logical address, the start physical address, the first bit length, the second bit length, and the relative logical address offsets and the relative physical address offsets of the plurality pieces of target data. Therefore, the information mentioned above may be used as the metadata of the plurality pieces of target data for determining the mapping relationship between the logical addresses and the physical addresses of the plurality pieces of target data.

Optionally, in this embodiment, a preset data structure may be used to store the metadata of the plurality pieces of target data, as shown in Fig. 3. Because the plurality pieces of target data share the same start logical address, start physical address, first bit length, and second bit length, the start logical address, the start physical address, the first bit length, and the second bit length are determined as header information (Header) of the preset data structure; and the relative logical address offsets and the relative physical address offsets of the plurality pieces of target data are used as an entry list in the preset data structure, and the relative logical address offset and the relative physical address offset of each piece of target data are used as one entry. In this way, when it is necessary to determine the global logical address offset and the global physical address offset of a specific piece of target data among the plurality pieces of target data, the start logical address, the start physical address, the first bit length, and the second bit length may be read from the header information, and the corresponding relative logical address offset and the corresponding relative physical address offset may be read from the entry list, to finally determine the global logical address offset and the global physical address offset.

Optionally, in the metadata of the preset data structure, the header information and the entry list may be stored together in the memory, or may be stored separately. For example, the header information of the preset data structure is stored in a first memory area; the entry list of the preset data structure is stored in a second memory area, and a start memory address, in the second memory area, of the entry list of the preset data structure is added to the header information of the preset data structure. When the metadata is read, the start logical address, the start physical address, the first bit length, and the second bit length may be read from the header information, and based on the start memory address in the header information, the corresponding relative logical address offset and the corresponding relative physical address offset may be read from the entry list in the second memory area, thereby reasonably utilizing the memory space.

In addition, for ease of storage, subsequent reading, and calculation, in response to memory occupied by an entry of the preset data structure being less than a preset number of bytes, for example, 8 bytes, byte padding is performed to fill the memory occupied by the entry of the preset data structure to the preset number of bytes.

Certainly, in this embodiment, the metadata of the plurality pieces of target data is not limited to being stored in the data structure mentioned above, and may be stored in other feasible manners, which may be not limited in this embodiment.

According to the metadata mapping method provided in this embodiment, when plurality pieces of target data in a target logical data block are continuously written into a target disk partition, a start logical address, in the target logical data block, of the plurality pieces of target data and a start physical address, in the target disk partition, of the plurality pieces of target data are acquired; a first bit length for relative logical address offsets of the plurality pieces of target data relative to the start logical address and a second bit length for relative physical address offsets of the plurality pieces of target data relative to the start physical address are determined; a corresponding relative logical address offset with the first bit length and a corresponding relative physical address offset with the second bit length are acquired for each of the plurality pieces of target data; and metadata of the plurality pieces of target data is constructed according to the start logical address, the start physical address, the first bit length, the second bit length, and the relative logical address offsets and the relative physical address offsets of the plurality pieces of target data, where the metadata is used for determining a mapping relationship between logical addresses and physical addresses of the plurality pieces of target data. In this embodiment, by determining the start logical address of the target data in the target logical data block and the start physical address of the target data in the target disk partition, and determining an appropriate bit length to record the relative logical address offset of the target data relative to the start logical address and the relative physical address offset of the target data relative to the start physical address, compared with directly recording a global logical address offset and a global physical address offset, a memory size occupied by the metadata may be reduced, and a memory space for storing the metadata may be saved.

The technical effect of this embodiment is illustrated below by an example. It is assumed that zone1 includes 128 entries of chunk1, and a size of each entry is assumed to be 64 KiB, then a total size of data of chunk1 included in zone1 is: logic_size = 64 KiB * 128 = 8 MB. It is assumed that a physical space spanned by the 8 MB of data is 16 MB. When a traditional metadata format with a fixed size of 6 bytes (4 bytes for a logical address offset and 2 bytes for a physical address offset) is used, a total of 6 * 128 = 768 bytes are required.

When the metadata format in this embodiment is used, the relative logical address offset of 8 MiB in the target logical data block requires at most 23 bits to be represented, and corresponds to 16 MiB in the target disk partition. Because the target disk partition usually uses 4 KiB as the minimum storage unit, 16 MiB corresponds to 4096 minimum storage units, and the maximum relative physical address offset requires at most 12 bits to be represented, therefore, each entry only needs 23 + 12 = 35 bits to be represented. Because the maximum size of a trunk in a zone is 256 MiB, a maximum relative logical offset is 256 MiB - 1, a bit size (logic_bits_count) of 28 bits may represent the maximum relative logical address offset. One zone has a maximum space of 256 MiB, that is, 64 * 1024 storage units, and a second bit length (physical_bits_count) of 16 bits may represent the maximum relative physical address offset, and at most two bytes are required to store information of the two bit lengths. 4 bytes are used for logic_start_offset, 2 bytes are used for physic_start_offset, and 4 bytes are used for total_logic_size. Considering 4-byte alignment, 4 bytes are used for physic_start_offset, and 4 bytes are used for a memory space that stores the size of the two bit lengths, then 16 bytes are required. Therefore, the total space used by the metadata format in this embodiment is: (35 * 128) / 8 + 16 = 576 bytes, which saves 25% of space compared with the previous 768 bytes.

The above example is only an example of this embodiment to prove the benefits. Under a single-machine storage engine similar to Chunkserver, the use of a dynamic metadata format scheme to establish a mapping between a logical location and a physical location of a data block may also achieve the purposes of reducing the size of the metadata and saving the memory space.

On the basis of any one of the above embodiments, the determining a first bit length for relative logical address offsets of the plurality pieces of target data relative to the start logical address and a second bit length for relative physical address offsets of the plurality pieces of target data relative to the start physical address according to S202 includes:

determining, according to a maximum relative offset of the plurality pieces of target data in the target logical data block, a minimum bit length capable of representing the relative logical address offsets of the plurality pieces of target data as the first bit length; and

determining, according to a maximum relative offset of the plurality pieces of target data in the target disk partition, a minimum bit length capable of representing the relative physical address offsets of the plurality pieces of target data as the second bit length.

In this embodiment, in order to reduce as much as possible the memory space occupied by the relative logical address offsets and the relative physical address offsets of the plurality pieces of target data, a minimum first bit length for the relative logical address offsets and a minimum second bit length for the relative physical address offsets of the plurality pieces of target data may be determined.

Specifically, first, the maximum relative offset of the plurality pieces of target data in the target logical data block is determined, and the number of right shifts may be determined by means of right shifting (that is, dividing by 2), and the cumulative number of right shifts when the result of right shifting becomes 0 is determined as the minimum first bit length. For example, it is assumed that the maximum relative offset of the plurality pieces of target data in the target logical data block is 8 MiB (the offset starts from 0), in the first right shift, that is, the maximum relative offset divided by 2 becomes 4 MiB, and the cumulative number of right shifts is 1; in the second right shift, the maximum relative offset divided by 2 becomes 2 MiB, and the cumulative number of right shifts is 2; in the third right shift, the maximum relative offset divided by 2 becomes 1 MiB, and the cumulative number of right shifts is 3; in the fourth right shift, the maximum relative offset becomes 512 * 1024 B, and the cumulative number of right shifts is 4; and so on, that is, the minimum first bit length for the relative logical address offsets of the plurality pieces of target data with the maximum relative offset of 8 MiB is 24 bits.

Similarly, for the minimum second bit length, first, the maximum relative offset of the plurality pieces of target data in the target disk partition is determined, and the number of right shifts may be determined by means of right shifting, and the cumulative number of right shifts when result of right shifting becomes 0 is determined as the minimum second bit length. For example, it is assumed that the maximum relative offset of the plurality pieces of target data in the target disk partition is 8 MiB, and because a minimum physical storage unit is 4 KiB, the number of the minimum storage units is first calculated to be 2 KiB. In the first right shift, that is, the maximum relative offset divided by 2 becomes 1 KiB, and the cumulative number of right shifts is 1; in the second right shift, the maximum relative offset divided by 2 becomes 512, and the cumulative number of right shifts is 2; in the third right shift, the maximum relative offset divided by 2 becomes 256, and the cumulative number of right shifts is 3; in the fourth right shift, the maximum relative offset becomes 128, and the cumulative number of right shifts is 4; and so on, that is, the minimum second bit length for the relative physical address offset of the plurality pieces of target data with the maximum relative offset of 8 MiB is 12 bits.

Certainly, the minimum first bit length and the minimum second bit length may also be determined in other manners, as long as all the relative logical address offsets and all the relative physical address offsets may be represented by the lengths.

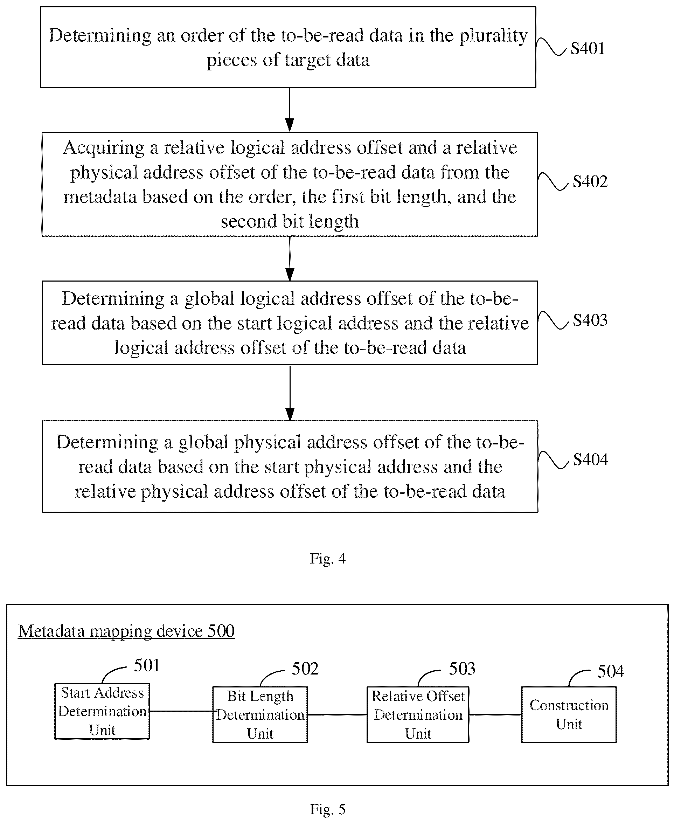

On the basis of any one of the above embodiments, as shown in Fig. 4, after the construction of the metadata of the plurality pieces of target data is completed, when it is necessary to determine the global logical address offset and the global physical address offset of a specific piece of to-be-read data among the plurality pieces of target data, the following process may be used.

In S401, an order of the to-be-read data in the plurality pieces of target data is determined.

In S402, a relative logical address offset and a relative physical address offset of the to-be-read data are acquired from the metadata according to the order, the first bit length, and the second bit length.

In S403, the global logical address offset of the to-be-read data is determined according to the start logical address and the relative logical address offset of the to-be-read data.

In S404, the global physical address offset of the to-be-read data is determined according to the start physical address and the relative physical address offset of the to-be-read data.

In this embodiment, first, the order (denoted as idx) of the to-be-read data among the plurality pieces of target data is determined, that is, which position the to-be-read data occupies among the plurality pieces of target data, and then the relative logical address offset and the relative physical address offset of the to-be-read data may be acquired from the metadata according to the order, the first bit length, and the second bit length, that is, the relative logical address offset and the relative physical address offset of each piece of target data are respectively with the first bit length and the second bit length. Because the order of the to-be-read data in the plurality pieces of target data is known, the relative logical address offset and the relative physical address offset of the to-be-read data may be read by skipping the relative logical address offset and the relative physical address offset of the target data prior to the to-be-read data.

Further, the global logical address offset of the to-be-read data is determined based on the start logical address and in combination with the relative logical address offset of the to-be-read data. Specifically, given that the start logical address is known, the global logical address offset corresponding to the start logical address may be determined, and the relative logical address offset of the to-be-read data is added to the global logical address offset corresponding to the start logical address to obtain the global logical address offset of the to-be-read data.

Similarly, the global physical address offset of the to-be-read data is determined based on the start physical address and in combination with the relative physical address offset of the to-be-read data. Specifically, given that the start physical address is known, the global physical address offset corresponding to the start physical address may be determined, and the relative physical address offset of the to-be-read data is added to the global physical address offset corresponding to the start physical address to obtain the global physical address offset of the to-be-read data.

On the basis of the above embodiment, when the relative logical address offset and the relative physical address offset of the to-be-read data are acquired from the metadata according to the order, the first bit length, and the second bit length, the method may specifically include:

according to the order, the first bit length, and the second bit length, determining a start byte, in the entry list, of a start position of the relative logical address offset and the relative physical address offset of the to-be-read data and a start bit, in the start byte, of the start position of the relative logical address offset and the relative physical address offset of the to-be-read data; and

acquiring entry data with a preset number of bytes from the start byte in the entry list, and acquiring the relative logical address offset and the relative physical address offset of the to-be-read data from the entry data with the preset number of bytes according to the first bit length, the second bit length, and the start bit.

In this embodiment, considering that the entries in the entry list are stored continuously in the memory, and an electronic device such as a computer usually cannot read data from the memory bit by bit, but usually reads data in the unit of byte, therefore, in this embodiment, the relative logical address offset and the relative physical address offset of the to-be-read data also need to be read in the unit of byte. However, the relative logical address offset and the relative physical address offset of the to-be-read data may not just occupy an integral number of bytes, and the start byte, in the entry list, of the start position of the relative logical address offset and the relative physical address offset of the to-be-read data and the start bit, in the start byte, of the start position of the relative logical address offset and the relative physical address offset of the to-be-read data is necessary to be determined according to the order, the first bit length, and the second length, that is, to determine from which byte the relative logical address offset and the relative physical address offset of the to-be-read data start, and from which bit in the byte the relative logical address offset and the relative physical address offset of the to-be-read data start. Then, entry data with a preset number of bytes may be acquired from the start byte in the entry list in the unit of byte, and the relative logical address offset with the first bit length and the relative physical address offset with the second bit length, that is, the relative logical address offset and the relative physical address offset of the to-be-read data, may be acquired from the entry data with the preset number of bytes according to the first bit length, the second bit length, and the start bit.

The calculation process may be as follows.

First, the start bit (bits_count), in the entry list, of the relative logical address offset and the relative physical address offset of the to-be-read data is determined:$bits_count = idx \times \left(the first bit length+the second bit length\right) .$

Then, the start byte (byte_offset), in the entry list, of the start position of the relative logical address offset and the relative physical address offset of the to-be-read data and the start bit (traling_bits_count), in the start byte, of the start position of the relative logical address offset and the relative physical address offset of the to-be-read data are determined:$byte_offset = bits_count / 8$$traling_bits_count = bits_count % 8$

Optionally, after the entry data with the preset number of bytes is acquired, the relative logical address offset and the relative physical address offset of the to-be-read data may be acquired by means of logical operation, and the specific process may be as follows.

The entry data with the preset number of bytes is right-shifted to obtain second entry data, causing the relative logical address offset of the to-be-read data to start from the lowest bit of the second entry data.

First data with the preset number of bytes is constructed according to the first bit length, a bit value corresponding to the relative logical address offset of the to-be-read data in the first data is 1, and the other bit values are 0; and an AND operation is performed on the second entry data and the first data to obtain the relative logical address offset of the to-be-read data.

The second entry data is right-shifted to obtain third entry data, causing the relative physical address offset of the to-be-read data to start from the lowest bit of the third entry data; second data with the preset number of bytes is constructed according to the second bit length, a bit value corresponding to the relative physical address offset of the to-be-read data in the second data is 1, and the other bit values are 0; and an AND operation is performed on the third entry data and the second data to obtain the relative physical address offset of the to-be-read data.

In this embodiment, in the entry data with the preset number of bytes, the relative logical address offset and the relative physical address offset of the to-be-read data start from the start bit traling_bits_count of the first byte, and the entry data with the preset number of bytes may be right-shifted, and the number of shift bits is equal to traling_bits_count, causing the relative logical address offset of the to-be-read data to start from the lowest bit of the second entry data.

For example, entry data before the right shift is as follows:

| ... | Relative physical address offset of the to-be-read data | | | | | | | Relative logical address offset of the to-be-read data | | | | | | | ... |
|---|---|---|---|---|---|---|---|---|---|---|---|---|---|---|---|
| ... | 1 | 0 | 1 | ... | 1 | 1 | 0 | 1 | 1 | 0 | ... | 0 | 1 | 0 | ... |

After the right shift, the second entry data is obtained as follows:

| ... | Relative physical address offset of the to-be-read data | | | | | | | Relative logical address offset of the to-be-read data | | | | | | |
|---|---|---|---|---|---|---|---|---|---|---|---|---|---|---|
| ... | 1 | 0 | 1 | ... | 1 | 1 | 0 | 1 | 1 | 0 | ... | 0 | 1 | 0 |

Further, the first data with the preset number of bytes may be constructed according to the first bit length, the bit value corresponding to the relative logical address offset of the to-be-read data in the first data is 1, and the other bit values are 0. For example, the first data may be constructed as follows:

| | | | | | | | | | | | | | | |
|---|---|---|---|---|---|---|---|---|---|---|---|---|---|---|
| ... | 0 | 0 | 0 | ... | 0 | 0 | 0 | 1 | 1 | 1 | ... | 1 | 1 | 1 |

An AND operation is performed on the second entry data after the right shift and the second data to obtain the relative logical address offset of the to-be-read data as follows:

| | | | | | | | | | | | | | | |
|---|---|---|---|---|---|---|---|---|---|---|---|---|---|---|
| ... | 0 | 0 | 0 | ... | 0 | 0 | 0 | 1 | 1 | 0 | ... | 0 | 1 | 0 |

The first data may be constructed in the following manner: data obtained by left-shifting 1 by the first bit length, minus 1.

Further, the second entry data may be further right-shifted to obtain the third entry data, causing the relative physical address offset of the to-be-read data to start from the lowest bit of the third entry data. For example, the second entry data is right-shifted to obtain the third entry data as follows:

| Relative logical address offset of next data | | | | | | | | Relative physical address offset of the to-be-read data | | | | | | |
|---|---|---|---|---|---|---|---|---|---|---|---|---|---|---|
| ... | ... | ... | ... | ... | ... | ... | ... | 1 | 0 | 1 | ... | 1 | 1 | 0 |

The second data with the preset number of bytes may be constructed according to the second bit length, a bit value corresponding to the relative physical address offset of the to-be-read data in the second data is 1, and the other bit values are 0. The second data may be as follows:

| | | | | | | | | | | | | | | |
|---|---|---|---|---|---|---|---|---|---|---|---|---|---|---|
| 0 | 0 | 0 | 0 | ... | 0 | 0 | 0 | 1 | 1 | 1 | ... | 1 | 1 | 1 |

An AND operation is performed on the third entry data after the right shift and the second data to obtain the relative physical address offset of the to-be-read data as follows:

| | | | | | | | | | | | | | | |
|---|---|---|---|---|---|---|---|---|---|---|---|---|---|---|
| 0 | 0 | 0 | 0 | ... | 0 | 0 | 0 | 1 | 0 | 1 | ... | 1 | 1 | 0 |

The second data may be constructed in the following manner: data obtained by left-shifting 1 by the second bit length, minus 1.

Certainly, the relative logical address offset and the relative physical address offset of the to-be-read data may also be acquired from the entry data with the preset number of bytes according to the first bit length, the second bit length, and the start bit in other manners, which may be not limited here.

On the basis of the above embodiment, because the global logical address offset of the to-be-read data may be determined, the global logical address offset of the data following the to-be-read data may also be determined, and then the length, in the target logical data block, of the to-be-read data may be determined according to the global logical address offset of the to-be-read data and the global logical address offset of the data next to the to-be-read data, that is, a difference between the global logical address offset of the data following the to-be-read data and the global logical address offset of the to-be-read data.

Further, the length, in the target disk partition, of the to-be-read data may be determined according to the length, in the target logical data block, of the to-be-read data. Specifically, the target disk partition uses a fixed-size minimum storage unit for storage, for example, 4 KiB. Therefore, the length (that is, the physical length) of the to-be-read data in the target disk partition is an integral multiple of the minimum storage unit, and specifically is the length (that is, the logical length) of the to-be-read data in the target logical data block rounded up to the nearest integral multiple of the minimum storage unit. Taking the minimum storage unit of 4 KiB as an example, the physical length of the to-be-read data = Align (the logical length, 4 KiB), that is, the logical length is rounded up to the nearest multiple of 4 KiB through memory alignment operation.

Further, the obtained global logical address offset of the to-be-read data, the length, in the target logical data block, of the to-be-read data, the global physical address offset of the to-be-read data, and the length, in the target disk partition, of the to-be-read data may be used as the complete metadata of the to-be-read data.

Corresponding to the metadata mapping method of the above embodiments, Fig. 5 is a structural block diagram of a metadata mapping device provided by an embodiment of the present disclosure. For ease of description, only parts related to the embodiments of the present disclosure are shown. Referring to Fig. 5, the metadata mapping device 500 includes: a start address determination unit 501, a bit length determination unit 502, a relative offset determination unit 503, and a construction unit 504.

The start address determination unit 501 is configured to: when plurality pieces of target data in a target logical data block are continuously written into a target disk partition, acquire a start logical address, in the target logical data block, of the plurality pieces of target data and a start physical address, in the target disk partition, of the plurality pieces of target data.

The bit length determination unit 502 is configured to determine a first bit length for relative logical address offsets of the plurality pieces of target data relative to the start logical address and a second bit length for relative physical address offsets of the plurality pieces of target data relative to the start physical address.

The relative offset determination unit 503 is configured to acquire a corresponding relative logical address offset with the first bit length and a corresponding relative physical address offset with the second bit length for each of the plurality pieces of target data.

The construction unit 504 is configured to construct metadata of the plurality pieces of target data according to the start logical address, the start physical address, the first bit length, the second bit length, and the relative logical address offsets and the relative physical address offsets of the plurality pieces of target data, where the metadata is used for determining a mapping relationship between logical addresses and physical addresses of the plurality pieces of target data.

In one or more embodiments of the present disclosure, when determining the first bit length for the relative logical address offsets of the plurality pieces of target data relative to the start logical address and the second bit length for the relative physical address offsets of the plurality pieces of target data relative to the start physical address, the bit length determination unit 502 is configured to:
determine, according to a maximum relative offset of the plurality pieces of target data in the target logical data block, a minimum bit length capable of representing the relative logical address offsets of the plurality pieces of target data as the first bit length; and
determine, according to a maximum relative offset of the plurality pieces of target data in the target disk partition, a minimum bit length capable of representing the relative physical address offsets of the plurality pieces of target data as the second bit length.

In one or more embodiments of the present disclosure, when constructing the metadata of the plurality pieces of target data according to the start logical address, the start physical address, the first bit length, the second bit length, and the relative logical address offsets and the relative physical address offsets of the plurality pieces of target data, the construction unit 504 is configured to:
construct, for the plurality pieces of target data, the metadata of a preset data structure, where the start logical address, the start physical address, the first bit length, and the second bit length are determined as header information of the preset data structure; and the relative logical address offsets and the relative physical address offsets of the plurality pieces of target data are used as an entry list in the preset data structure.

In one or more embodiments of the present disclosure, when constructing the metadata of the preset data structure for the plurality pieces of target data, the construction unit 504 is further configured to:
store the header information of the preset data structure in a first memory area; and
store the entry list of the preset data structure in a second memory area, and add a start memory address, in the second memory area, of the entry list of the preset data structure to the header information of the preset data structure.

In one or more embodiments of the present disclosure, when storing the entry list of the preset data structure in the second memory area, the construction unit 504 is further configured to:
in response to memory occupied by an entry of the preset data structure being less than a preset number of bytes, perform byte padding to fill the memory occupied by the entry of the preset data structure to the preset number of bytes.

In one or more embodiments of the present disclosure, the device further includes a reading unit, configured to:
determine an order of to-be-read data in the plurality pieces of target data;
acquire a relative logical address offset and a relative physical address offset of the to-be-read data from the metadata according to the order, the first bit length, and the second bit length;
determine a global logical address offset of the to-be-read data according to the start logical address and the relative logical address offset of the to-be-read data; and
determine a global physical address offset of the to-be-read data according to the start physical address and the relative physical address offset of the to-be-read data.

In one or more embodiments of the present disclosure, when acquiring the relative logical address offset and the relative physical address offset of the to-be-read data from the metadata according to the order, the first bit length, and the second bit length, the reading unit is configured to:
determine, according to the order, the first bit length, and the second bit length, a start byte, in the entry list, of a start position of the relative logical address offset and the relative physical address offset of the to-be-read data and a start bit, in the start byte, of the start position of the relative logical address offset and the relative physical address offset of the to-be-read data; and
acquire entry data with a preset number of bytes from the start byte in the entry list, and acquire the relative logical address offset and the relative physical address offset of the to-be-read data from the entry data with the preset number of bytes according to the first bit length, the second bit length, and the start bit.

In one or more embodiments of the present disclosure, when acquiring the relative logical address offset and the relative physical address offset of the to-be-read data from the entry data with the preset number of bytes according to the first bit length, the second bit length, and the start bit, the reading unit is configured to:
right-shift the entry data with the preset number of bytes to obtain second entry data, causing the relative logical address offset of the to-be-read data to start from a lowest bit of the second entry data;
construct first data with the preset number of bytes according to the first bit length, a bit value corresponding to the relative logical address offset of the to-be-read data in the first data being 1, and the other bit values being 0; and perform an AND operation on the second entry data and the first data to obtain the relative logical address offset of the to-be-read data;
right-shift the second entry data to obtain third entry data, causing the relative physical address offset of the to-be-read data to start from a lowest bit of the third entry data; construct second data with the preset number of bytes according to the second bit length, a bit value corresponding to the relative physical address offset of the to-be-read data in the second data being 1, and the other bit values being 0; and perform an AND operation on the third entry data and the second data to obtain the relative physical address offset of the to-be-read data.

In one or more embodiments of the present disclosure, the reading unit is further configured to:
determine a length, in the target logical data block, of the to-be-read data according to the global logical address offset of the to-be-read data and a global logical address offset of data following the to-be-read data; and
determine a length, in the target disk partition, of the to-be-read data according to the length, in the target logical data block, of the to-be-read data.

The device provided in this embodiment may be used to implement the technical solutions of the above method embodiments, and the implementation principles and technical effects thereof are similar, which will not be repeated here in this embodiment.

In order to implement the above embodiments, an embodiment of the present disclosure further provides an electronic device.

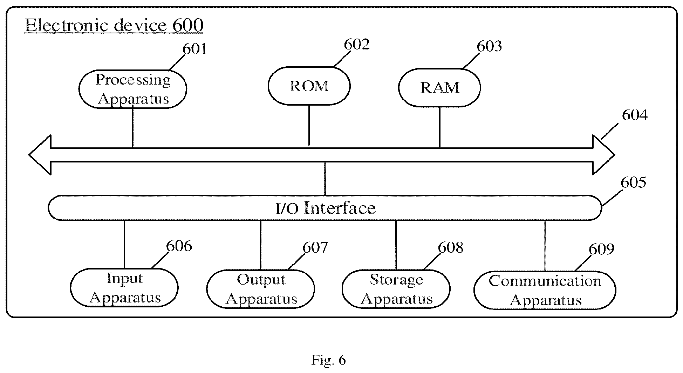

Referring to Fig. 6, Fig. 6 shows a schematic structural diagram of an electronic device 600 for implementing an embodiment of the present disclosure, and the electronic device 600 may be a terminal device or a server. The terminal device may include, but is not limited to, a mobile terminal such as a mobile phone, a notebook computer, a digital broadcast receiver, a personal digital assistant (abbreviated as PDA), a tablet computer, a portable media player (abbreviated as PMP), a vehicle-mounted terminal (e.g., a vehicle navigation terminal), etc., and a fixed terminal such as a digital TV, a desktop computer, etc. The electronic device shown in Fig. 6 is only an example, and should not impose any limitation on the function and scope of use of the embodiments of the present disclosure.

As shown in Fig. 6, the electronic device 600 may include a processing apparatus 601 (e.g., a central processing unit, a graphics processor, etc.), which may perform various appropriate actions and processing according to a program stored in a read-only memory (abbreviated as ROM) 602 or a program loaded from a storage apparatus 608 into a random-access memory (abbreviated as RAM) 603. The RAM 603 further stores various programs and data required for operations of the electronic device 600. The processing apparatus 601, the ROM 602, and the RAM 603 are interconnected by means of a bus 604. An input/output (I/O) interface 605 is also connected to the bus 604.

Generally, the following apparatuses may be connected to the I/O interface 605: an input apparatus 606 including, for example, a touch screen, a touchpad, a keyboard, a mouse, a camera, a microphone, an accelerometer, a gyroscope, etc.; an output apparatus 607 including, for example, a liquid crystal display (Liquid Crystal Display, LCD for short), a speaker, a vibrator, etc.; the storage apparatus 608 including, for example, a magnetic tape, a hard disk, etc.; and a communication apparatus 609. The communication apparatus 609 may allow the electronic device 600 to communicate wirelessly or wiredly with other devices to exchange data. Although Fig. 6 shows the electronic device 600 having various apparatuses, it should be understood that not all the apparatuses shown here need to be implemented or provided. Alternatively, more or fewer apparatuses may be implemented or provided.

In particular, according to the embodiments of the present disclosure, the process described above with reference to the flowchart may be implemented as a computer software program. For example, the embodiments of the present disclosure include a computer program product, which includes a computer program carried on a computer-readable medium, where the computer program includes program codes for executing the method shown in the flowchart. In such an embodiment, the computer program may be downloaded from a network and installed through the communication apparatus 609, or installed from the storage apparatus 608, or installed from the ROM 602. When the computer program is executed by the processing apparatus 601, the preceding functions defined in the method of the embodiments of the present disclosure are executed, and the implementation principles and technical effects thereof are similar, which will not be repeated here in this embodiment.

It should be noted that the preceding computer-readable medium in the present disclosure may be a computer-readable signal medium, a computer-readable storage medium, or any combination thereof. The computer-readable storage medium may be, for example, but is not limited to, an electronic, magnetic, optical, electromagnetic, infrared, or semiconductor system, apparatus, device, or any suitable combination thereof. More specific examples of the computer-readable storage medium may include, but are not limited to: an electrically connected portable computer magnetic disk having one or more wires, a hard disk, a random access memory (RAM), a read-only memory (ROM), an erasable programmable read-only memory (EPROM or a flash memory), an optical fiber, a portable compact disc read-only memory (CD-ROM), an optical storage device, a magnetic storage device, or any suitable combination thereof. In the present disclosure, the computer-readable storage medium may be any tangible medium that contains or stores a program, and the program may be used by or in combination with an instruction execution system, apparatus, or device. In the present disclosure, the computer-readable signal medium may include a data signal propagated on a baseband or as a part of a carrier, and computer-readable program codes are carried in the data signal. The data signal propagated in this manner may take many forms, including but not limited to, an electromagnetic signal, an optical signal, or any suitable combination thereof. The computer-readable signal medium may also be any computer-readable medium other than the computer-readable storage medium, and the computer-readable signal medium may send, propagate, or transmit a program used by or in combination with an instruction execution system, apparatus, or device. The program codes contained on the computer-readable medium may be transmitted in any suitable medium, including but not limited to: a wire, an optical cable, a radio frequency (RF), etc., or any suitable combination thereof.

The computer-readable medium may be contained in the electronic device, or may exist alone without being assembled into the electronic device.

The computer-readable medium carries one or more programs, and when the one or more programs are executed by the electronic device, the electronic device is caused to execute the method shown in the preceding embodiments, and the implementation principles and technical effects thereof are similar, which will not be repeated here in this embodiment.

The computer program codes for executing the operations of the present disclosure may be written in one or more programming languages or a combination thereof, where the preceding programming languages include object-oriented programming languages, such as Java, Smalltalk, and C++, and further include conventional procedural programming languages, such as "C" language or similar programming languages. The program codes may be completely executed on a computer of a user, partly executed on a computer of a user, executed as an independent software package, partly executed on a computer of a user and partly executed on a remote computer, or completely executed on a remote computer or a server. In the case of involving the remote computer, the remote computer may be connected to the computer of the user through any type of network, including a local area network (LAN) or a wide area network (WAN), or may be connected to an external computer (for example, connected through the Internet with the aid of an Internet service provider).

The flowcharts and block diagrams in the drawings illustrate the possibly implemented architectures, functions, and operations of the systems, methods, and computer program products according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the drawings. For example, two blocks shown in succession may actually be executed substantially in parallel, or they may sometimes be executed in a reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The involved units described in the embodiments of the present disclosure may be implemented by means of software, and may also be implemented by means of hardware. The name of a unit does not constitute a limitation on the unit itself under certain circumstances.

The functions described above herein may be at least partially executed by one or more hardware logic components. For example, without limitation, exemplary types of the hardware logic components that may be used include: a field programmable gate array (FPGA), an application specific integrated circuit (ASIC), an application specific standard product (ASSP), a system on chip (SOC), a complex programmable logical device (CPLD), etc.

One or more embodiments of the present disclosure provide a metadata mapping method. The method includes steps described below.

When plurality pieces of target data in a target logical data block are continuously written into a target disk partition, a start logical address, in the target logical data block, of the plurality pieces of target data and a start physical address, in the target disk partition, of the plurality pieces of target data are acquired.

A first bit length for relative logical address offsets of the plurality pieces of target data relative to the start logical address and a second bit length for relative physical address offsets of the plurality pieces of target data relative to the start physical address are determined.

A corresponding relative logical address offset with the first bit length and a corresponding relative physical address offset with the second bit length are acquired for each of the plurality pieces of target data.

Metadata of the plurality pieces of target data is constructed according to the start logical address, the start physical address, the first bit length, the second bit length, and the relative logical address offsets and the relative physical address offsets of the plurality pieces of target data, where the metadata is used for determining a mapping relationship between logical addresses and physical addresses of the plurality pieces of target data.

According to one or more embodiments of the present disclosure, the determining a first bit length for a relative logical address offsets of the plurality pieces of target data relative to the start logical address and a second bit length for a relative physical address offsets of the plurality pieces of target data relative to the start physical address includes:
determining, according to a maximum relative offset of the plurality pieces of target data in the target logical data block, a minimum bit length capable of representing the relative logical address offsets of the plurality pieces of target data as the first bit length; and
determining, according to a maximum relative offset of the plurality pieces of target data in the target disk partition, a minimum bit length capable of representing the relative physical address offsets of the plurality pieces of target data as the second bit length.

According to one or more embodiments of the present disclosure, the constructing metadata of the plurality pieces of target data according to the start logical address, the start physical address, the first bit length, the second bit length, and the relative logical address offsets and the relative physical address offsets of the plurality pieces of target data includes:
constructing, for the plurality pieces of target data, metadata of a preset data structure, where the start logical address, the start physical address, the first bit length, and the second bit length are determined as header information of the preset data structure; and the relative logical address offsets and the relative physical address offsets of the plurality pieces of target data are used as an entry list in the preset data structure.

According to one or more embodiments of the present disclosure, the constructing, for the plurality pieces of target data, metadata of a preset data structure further includes:
storing the header information of the preset data structure in a first memory area; and
storing the entry list of the preset data structure in a second memory area, and adding a start memory address, in the second memory area, of the entry list of the preset data structure to the header information of the preset data structure.

According to one or more embodiments of the present disclosure, the storing the entry list of the preset data structure in a second memory area further includes:
in response to memory occupied by an entry of the preset data structure being less than a preset number of bytes, performing byte padding to fill the memory occupied by the entry of the preset data structure to the preset number of bytes.

According to one or more embodiments of the present disclosure, after the constructing the metadata of the plurality pieces of target data, the method further includes steps described below.

An order of to-be-read data in the plurality pieces of target data is determined.

A relative logical address offset and a relative physical address offset of the to-be-read data are acquired from the metadata according to the order, the first bit length, and the second bit length.

A global logical address offset of the to-be-read data is determined according to the start logical address and the relative logical address offset of the to-be-read data.

A global physical address offset of the to-be-read data is determined according to the start physical address and the relative physical address offset of the to-be-read data.

According to one or more embodiments of the present disclosure, the acquiring the relative logical address offset and the relative physical address offset of the to-be-read data from the metadata according to the order, the first bit length, and the second bit length includes:
according to the order, the first bit length, and the second bit length, determining a start byte, in the entry list, of a start position of the relative logical address offset and the relative physical address offset of the to-be-read data and a start bit, in the start byte, of the start position of the relative logical address offset and the relative physical address offset of the to-be-read data; and
acquiring entry data with a preset number of bytes from the start byte in the entry list, and acquiring the relative logical address offset and the relative physical address offset of the to-be-read data from the entry data with the preset number of bytes according to the first bit length, the second bit length, and the start bit.

According to one or more embodiments of the present disclosure, the acquiring the relative logical address offset and the relative physical address offset of the to-be-read data from the entry data with the preset number of bytes according to the first bit length, the second bit length, and the start bit includes:
right-shifting the entry data with the preset number of bytes to obtain second entry data, causing the relative logical address offset of the to-be-read data to start from a lowest bit of the second entry data;
constructing first data with the preset number of bytes according to the first bit length, a bit value corresponding to the relative logical address offset of the to-be-read data in the first data being 1, and the other bit values being 0; and performing an AND operation on the second entry data and the first data to obtain the relative logical address offset of the to-be-read data;
right-shifting the second entry data to obtain third entry data, causing the relative physical address offset of the to-be-read data to start from a lowest bit of the third entry data; constructing second data with the preset number of bytes according to the second bit length, a bit value corresponding to the relative physical address offset of the to-be-read data in the second data being 1, and the other bit values being 0; and performing an AND operation on the third entry data and the second data to obtain the relative physical address offset of the to-be-read data.

According to one or more embodiments of the present disclosure, the method further includes steps described below.

A length, in the target logical data block, of the to-be-read data is determined according to the global logical address offset of the to-be-read data and a global logical address offset of data next to the to-be-read data.

A length, in the target disk partition, of the to-be-read data is determined according to the length, in the target logical data block, of the to-be-read data.

One or more embodiments of the present disclosure provide a metadata mapping device. The device includes a start address determination unit, a bit length determination unit, a relative offset determination unit, and a construction unit.

The start address determination unit is configured to: when plurality pieces of target data in a target logical data block are continuously written into a target disk partition, acquire a start logical address, in the target logical data block, of the plurality pieces of target data and a start physical address, in the target disk partition, of the plurality pieces of target data.

The bit length determination unit is configured to determine a first bit length for relative logical address offsets of the plurality pieces of target data relative to the start logical address and a second bit length for relative physical address offsets of the plurality pieces of target data relative to the start physical address.

The relative offset determination unit is configured to acquire, for each of the plurality pieces of target data, a corresponding relative logical address offset with the first bit length and a corresponding relative physical address offset with the second bit length.

The construction unit is configured to construct metadata of the plurality pieces of target data according to the start logical address, the start physical address, the first bit length, the second bit length, and the relative logical address offsets and the relative physical address offsets of the plurality pieces of target data, where the metadata is used for determining a mapping relationship between logical addresses and physical addresses of the plurality pieces of target data.

According to one or more embodiments of the present disclosure, when determining the first bit length for the relative logical address offsets of the plurality pieces of target data relative to the start logical address and the second bit length for the relative physical address offsets of the plurality pieces of target data relative to the start physical address, the bit length determination unit is configured to:
determine, according to a maximum relative offset of the plurality pieces of target data in the target logical data block, a minimum bit length capable of representing the relative logical address offsets of the plurality pieces of target data as the first bit length; and
determine, according to a maximum relative offset of the plurality pieces of target data in the target disk partition, a minimum bit length capable of representing the relative physical address offsets of the plurality pieces of target data as the second bit length.

According to one or more embodiments of the present disclosure, when constructing the metadata of the plurality pieces of target data according to the start logical address, the start physical address, the first bit length, the second bit length, and the relative logical address offsets and the relative physical address offsets of the plurality pieces of target data, the construction unit is configured to:
construct, for the plurality pieces of target data, metadata of a preset data structure, where the start logical address, the start physical address, the first bit length, and the second bit length are determined as header information of the preset data structure; and the relative logical address offsets and the relative physical address offsets of the plurality pieces of target data are used as an entry list in the preset data structure.

According to one or more embodiments of the present disclosure, when constructing the metadata of the preset data structure for the plurality pieces of target data, the construction unit is further configured to:
store the header information of the preset data structure in a first memory area; and
store the entry list of the preset data structure in a second memory area, and add a start memory address, in the second memory area, of the entry list of the preset data structure to the header information of the preset data structure.

According to one or more embodiments of the present disclosure, when storing the entry list of the preset data structure in the second memory area, the construction unit is further configured to:
in response to memory occupied by an entry of the preset data structure being less than a preset number of bytes, perform byte padding to fill the memory occupied by the entry of the preset data structure to the preset number of bytes.

According to one or more embodiments of the present disclosure, the device further includes a reading unit, configured to:
determine an order of to-be-read data in the plurality pieces of target data;
acquire a relative logical address offset and a relative physical address offset of the to-be-read data from the metadata according to the order, the first bit length, and the second bit length;
determine a global logical address offset of the to-be-read data according to the start logical address and the relative logical address offset of the to-be-read data; and
determine a global physical address offset of the to-be-read data according to the start physical address and the relative physical address offset of the to-be-read data.

According to one or more embodiments of the present disclosure, when acquiring the relative logical address offset and the relative physical address offset of the to-be-read data from the metadata according to the order, the first bit length, and the second bit length, the reading unit is configured to:
according to the order, the first bit length, and the second bit length, determine a start byte, in the entry list, of a start position of the relative logical address offset and the relative physical address offset of the to-be-read data and a start bit, in the start byte, of the start position of the relative logical address offset and the relative physical address offset of the to-be-read data; and
acquire entry data with a preset number of bytes from the start byte in the entry list, and acquire the relative logical address offset and the relative physical address offset of the to-be-read data from the entry data with the preset number of bytes according to the first bit length, the second bit length, and the start bit.

According to one or more embodiments of the present disclosure, when acquiring the relative logical address offset and the relative physical address offset of the to-be-read data from the entry data with the preset number of bytes according to the first bit length, the second bit length, and the start bit, the reading unit is configured to:
right-shift the entry data with the preset number of bytes to obtain second entry data, causing the relative logical address offset of the to-be-read data to start from a lowest bit of the second entry data;
construct first data with the preset number of bytes according to the first bit length, a bit value corresponding to the relative logical address offset of the to-be-read data in the first data being 1, and the other bit values being 0; and perform an AND operation on the second entry data and the first data to obtain the relative logical address offset of the to-be-read data;
right-shift the second entry data to obtain third entry data, causing the relative physical address offset of the to-be-read data to start from a lowest bit of the third entry data; construct second data with the preset number of bytes according to the second bit length, a bit value corresponding to the relative physical address offset of the to-be-read data in the second data being 1, and the other bit values being 0; and perform an AND operation on the third entry data and the second data to obtain the relative physical address offset of the to-be-read data.

According to one or more embodiments of the present disclosure, the reading unit is further configured to:
determine a length, in the target logical data block, of the to-be-read data according to the global logical address offset of the to-be-read data and a global logical address offset of data following the to-be-read data; and
determine a length, in the target disk partition, of the to-be-read data according to the length, in the target logical data block, of the to-be-read data.

One or more embodiments of the present disclosure provide an electronic device. The electronic device includes at least one processor and at least one memory.

The at least one memory stores a computer-executed instruction.

The at least one processor executes the computer-executed instruction stored in the at least one memory, so that the at least one processor executes the metadata mapping method according to at least one of the above embodiments.

One or more embodiments of the present disclosure provide a non-transitory computer-readable storage medium. The non-transitory computer-readable storage medium stores a computer-executed instruction. When a processor executes the computer-executed instruction, the metadata mapping method according to at least one of the above embodiments is implemented.

One or more embodiments of the present disclosure provide a computer program product, including a computer program. When the computer program is executed by a processor, the metadata mapping method according to at least one of the above embodiments is implemented.

The preceding description illustrates merely preferred embodiments of the present disclosure and explanations of the applied technical principles. Those skilled in the art should understand that the scope of disclosure involved in the present disclosure is not limited to the technical solutions formed by specific combinations of the preceding technical features, and shall also cover other technical solutions formed by any combination of the preceding technical features or equivalent features thereof without departing from the preceding concept of disclosure. For example, a technical solution formed by a replacement of the preceding features with technical features with similar functions disclosed in the present disclosure (but not limited thereto) also falls within the scope of the present disclosure.

In addition, although the various operations are depicted in a particular order, it should not be construed as requiring these operations to be performed in the particular order shown or in a sequential order. Under specific circumstances, multitasking and parallel processing may be advantageous. Similarly, although several specific implementation details are contained in the preceding discussions, these details should not be construed as limiting the scope of the present disclosure. Certain features that are described in the context of separate embodiments may alternatively be implemented in combination in a single embodiment. In contrast, various features described in the context of a single embodiment may alternatively be implemented in multiple embodiments individually or in any suitable sub combination.

Although the subject matter has been described in a language specific to structural features and/or logical actions of the method, it should be understood that the subject matter defined in the appended claims is not necessarily limited to the specific features or actions described above. In contrast, the specific features and actions described above are merely exemplary forms for implementing the claims.

## Claims

1. A metadata mapping method, comprising:
when a plurality pieces of target data in a first logical data block are continuously written into a first disk partition, acquiring a start logical address, in the first logical data block, of the plurality pieces of target data and a start physical address, in the first disk partition, of the plurality pieces of target data (S201);
determining a first bit length for relative logical address offsets of the plurality pieces of target data relative to the start logical address and a second bit length for relative physical address offsets of the plurality pieces of target data relative to the start physical address (S202);
acquiring, for each of the plurality pieces of target data, a corresponding relative logical address offset with the first bit length and a corresponding relative physical address offset with the second bit length (S203); and
constructing metadata of the plurality pieces of target data according to the start logical address, the start physical address, the first bit length, the second bit length, and the relative logical address offsets and the relative physical address offsets of the plurality pieces of target data, wherein the metadata is used for determining a mapping relationship between logical addresses and physical addresses of the plurality pieces of target data (S204).

2. The method of claim 1, wherein the determining a first bit length for relative logical address offsets of the plurality pieces of target data relative to the start logical address and a second bit length for relative physical address offsets of the plurality pieces of target data relative to the start physical address comprises:
determining, according to a maximum relative offset of the plurality pieces of target data in the first logical data block, a minimum bit length capable of representing the relative logical address offsets of the plurality pieces of target data as the first bit length; and
determining, according to a maximum relative offset of the plurality pieces of target data in the first disk partition, a minimum bit length capable of representing the relative physical address offsets of the plurality pieces of target data as the second bit length.

3. The method of claim 1 or 2, wherein the constructing metadata of the plurality pieces of target data according to the start logical address, the start physical address, the first bit length, the second bit length, and the relative logical address offsets and the relative physical address offsets of the plurality pieces of target data comprises:
constructing, for the plurality pieces of target data, metadata of a preset data structure, wherein the start logical address, the start physical address, the first bit length, and the second bit length are determined as header information of the preset data structure; and the relative logical address offsets and the relative physical address offsets of the plurality pieces of target data are used as an entry list in the preset data structure.

4. The method of claim 3, wherein the constructing, for the plurality pieces of target data, metadata of a preset data structure comprises:
storing the header information of the preset data structure in a first memory area; and
storing the entry list of the preset data structure in a second memory area, and adding a start memory address, in the second memory area, of the entry list of the preset data structure to the header information of the preset data structure.

5. The method of claim 4, wherein the storing the entry list of the preset data structure in a second memory area further comprises:
in response to memory occupied by an entry of the preset data structure being less than a preset number of bytes, performing byte padding to fill the memory occupied by the entry of the preset data structure to the preset number of bytes.

6. The method of any one of claims 3-5, wherein after the constructing metadata of the plurality pieces of target data, the method further comprises:
determining an order of to-be-read data in the plurality pieces of target data (S401);
acquiring a relative logical address offset and a relative physical address offset of the to-be-read data from the metadata according to the order, the first bit length, and the second bit length (S402);
determining a global logical address offset of the to-be-read data according to the start logical address and the relative logical address offset of the to-be-read data (S403); and
determining a global physical address offset of the to-be-read data according to the start physical address and the relative physical address offset of the to-be-read data (S404).

7. The method of claim 6, wherein the acquiring a relative logical address offset and a relative physical address offset of the to-be-read data from the metadata according to the order, the first bit length, and the second bit length comprises:
according to the order, the first bit length, and the second bit length, determining a start byte, in the entry list, of a start position of the relative logical address offset and the relative physical address offset of the to-be-read data and a start bit, in the start byte, of the start position of the relative logical address offset and the relative physical address offset of the to-be-read data; and
acquiring entry data with a preset number of bytes from the start byte in the entry list, and acquiring the relative logical address offset and the relative physical address offset of the to-be-read data from the entry data with the preset number of bytes according to the first bit length, the second bit length, and the start bit.

8. The method of claim 7, wherein the acquiring the relative logical address offset and the relative physical address offset of the to-be-read data from the entry data with the preset number of bytes according to the first bit length, the second bit length, and the start bit comprises:
right-shifting the entry data with the preset number of bytes to obtain second entry data, causing the relative logical address offset of the to-be-read data to start from a lowest bit of the second entry data;
constructing first data with the preset number of bytes according to the first bit length, a bit value corresponding to the relative logical address offset of the to-be-read data in the first data being 1, and other bit values being 0;
performing an AND operation on the second entry data and the first data to obtain the relative logical address offset of the to-be-read data;
right-shifting the second entry data to obtain third entry data, causing the relative physical address offset of the to-be-read data starts from a lowest bit of the third entry data;
constructing second data with the preset number of bytes according to the second bit length, a bit value corresponding to the relative physical address offset of the to-be-read data in the second data being 1, and other bit values being 0; and
performing an AND operation on the third entry data and the second data to obtain the relative physical address offset of the to-be-read data.

9. The method of any one of claims 3-8, further comprising:
determining a length, in the first logical data block, of to-be-read data according to a global logical address offset of the to-be-read data and a global logical address offset of data following the to-be-read data; and
determining a length, in the first disk partition, of the to-be-read data according to the length, in the first logical data block, of the to-be-read data.

10. An electronic device, comprising: at least one processor and at least one memory,
wherein the at least one memory stores a computer-executed instruction; and
the at least one processor executes the computer-executed instruction stored in the at least one memory, causing the at least one processor executes the method of any one of claims 1 to 9.

11. A non-transitory computer-readable storage medium, wherein the non-transitory computer-readable storage medium stores a computer-executed instruction, and when a processor executes the computer-executed instruction, the method of any one of claims 1 to 9 is implemented.
